# EUROPEAN PATENT SPECIFICATION

(11) **EP 1 906 362 B1**
(45) Date of publication and mention of the grant of the patent: **21.11.2018**
(21) Application number: 07115293.8
(22) Date of filing: 30.08.2007
(51) Int. Cl.: B60Q 3/30, H01Q 1/32, G06K 13/08, B62J 6/00, B62K 19/46, G07B 15/06

(54) **Motorcycle communication device and mounting structure thereof**
Kommunikationsgerät für ein Motorrad und Montagestruktur dafür
Dispositif de communication de motocyclette et sa structure de montage

(30) Priority: 26.09.2006 JP 2006260418; 26.09.2006 JP 2006260618
(43) Date of publication of application: 02.04.2008
(73) Proprietor: HONDA MOTOR CO., LTD., Tokyo 107-8556 (JP)
(72) Inventor: Makabe, Takumi, Saitama 351-0193 (JP); Ogawa, Sumitaka, Saitama 351-0193 (JP); Tatewaki, Takefumi, Saitama 351-0193 (JP); Katayama, Mutsumi, Saitama 351-0193 (JP); Yamashita, Akihiko, Saitama 351-0193 (JP); Nagatsuyu, Toshiya, Saitama 351-0193 (JP)
(74) Representative: Rupp, Christian

(56) References cited:
- EP-A- 0 616 302
- CA-A1- 2 439 064
- DE-A1- 3 531 335
- DE-A1- 10 312 476
- JP-A- 10 194 177
- JP-A- 10 278 865
- JP-A- 2002 284 066
- JP-A- 2004 061 571
- JP-A- 2006 099 233
- JP-A- 2006 209 627
- US-A- 6 081 718
- US-A1- 2003 112 633
- US-A1- 2003 168 485
- US-A1- 2004 203 390

## Description

The present invention relates to a motorcycle having a mounting structure comprising a motorcycle communication device which is able to perform transmission and reception of specific information between a motorcycle and the outside by radio and includes an insertion slot into which a card storing predetermined information is insertable.

An ETC (Electronic Toll Collection System) has been developed and put into practical use in recent years with a view to relieving congestion associated with payment at toll gates on toll roads such as an expressway. In an ETC, payment of a road toll is performed as necessary information is communicated by radio between a vehicular communication device mounted in a vehicle and a system of a dedicated lane at a toll gate. The use of an ETC eliminates the need for an automobile to stop at a toll gate, thereby making it possible to reduce congestion.

In an ETC, a card recording information for identifying the user or bank account number and the like is inserted into a vehicular communication device in advance. Since this card is frequently inserted and extracted, it is desirable to provide the vehicular communication device at a convenient location.

Further, the ETC system also includes an antenna that performs radio communication with a transmitter/receiver device at a toll gate. It is desirable that the antenna be arranged as far front in the vehicle as possible in order to maintain good transmission and reception sensitivity of radio waves.

Incidentally, like automobiles, motorcycles also have to go through the same inconvenience associated with payment at toll gates. Development and research for an ETC designed for motorcycles are thus underway. In the case of motorcycles as well, it is also important to arrange the vehicular communication device at a convenient location by taking the ease of card insertion and extraction into consideration. However, the mounting of the vehicular communication device in a motorcycle is subject to more constraints than in an automobile. Further, in the case of an automobile, the vehicular communication device can be arranged at any location within the cabin desired by an occupant, whereas in the case of a motorcycle, the vehicular communication device must be arranged by taking environmental resistance, such as waterproof property, dust-proof property, and the like, into consideration. Additionally, while it is desirable also in the case of a motorcycle to arrange the antenna preferably used for said communication device at the front portion, the mounting of the antenna in a motorcycle is also subject to more constraints than in an automobile as described above.

In this regard, Patent Document 1 proposes a structure in which a vehicular communication device is built in a meter case by taking environmental resistance and ease of handling into consideration. Patent Document 1 further proposes a structure in which the antenna is arranged along the upper surface of the meter case by taking environmental resistance into consideration.

Meanwhile, in the case of a motorcycle, a wind screen is often provided in the front surface in order to prevent running wind from directly hitting an occupant and to reduce air resistance. A vortex sometimes forms at the upper end portion of the wind screen, which can cause wind noise or an increase in running resistance.

In this regard, Patent Document 2 proposes a structure in which an air guide passage communicating with the back surface side of the wind screen is provided to guide a proper amount of air, thereby suppressing generation of a vortex.

[Patent Document 1] JP-A No. H10-278865
[Patent Document 2] JP-A No. 2002-284066

When a vehicular communication device of the ETC is provided inside the cabin as in the case of an automobile, the vehicular communication device is illuminated by an interior light, thereby facilitating insertion and withdrawal of a card even in a dark place during nighttime or the like. However, since no component equivalent to such an interior light is present in the case of a motorcycle, when inserting or withdrawing a card into or from a vehicular communication device of the motorcycle in a dark place, the insertion or withdrawal must be performed near a road light or by relying solely on dim light.

The present invention has been made in view of the above-mentioned problems, and accordingly it is an object of the present invention to provide a motorcycle communication device which allows easy card insertion and withdrawal even in a dark place and provides superior environmental resistance, and a mounting structure thereof.

Moreover, in the configuration described in Patent Document 1, the antenna is provided along the upper surface of the meter case. However, if the meter case is small, the antenna cannot be placed, or is provided so as to project from the upper surface.

It is desirable to provide the antenna as far front in the vehicle as possible. On the other hand, it is desirable that the front portion of the vehicle be formed as smooth as possible in order to reduce running resistance. If the antenna is simply provided at the front of the vehicle without careful consideration, this results in an increase in air resistance. Further, since a large wind pressure is exerted on the front portion of the vehicle in particular, the mounting of the antenna must be sufficiently strong. Furthermore, since the front portion of the vehicle is regarded as playing a significant part in determining aesthetic appearance, it is desirable that the front portion be free from added objects.

JP 2006-209627 A discloses a motorcycle having a storage box with a lid in which a radio communication device with a card slot is mounted.

US-A-2003/0112633 discloses a motorcycle with a storage box comprising a lid and a light with turns on when the lid is opened.

DE 103 12 476 A1 discloses an illumination device for a storage box of a motorcycle. The illumination device has a button for switching the illumination device on and off.

EP-A-0 616 302 relates to an electronic traffic tariff reception system. A vehicle identification apparatus can identify the vehicles travelling freely on the road having the plurality of lanes separately in a control point of the reception system. An in-vehicle unit equipped with a smart card is mounted in a vehicle. An antenna for debiting process capable of performing radio communication with the in-vehicle unit is disposed.

JP 10 278865 A relates to a car-mounted communication device for a saddle riding type vehicle furnished with a communication unit to communicate between itself and a ground communication device which is furnished with a card reader to read information from an IC memory of a card in which information used for motion of the communication unit and a control unit to control the communication unit 29, at least the communication unit and the card reader are built in a meter case provided on a main body front part of the saddle riding type vehicle, and a card insertion hole a is formed on the meter case.

US-A-6 081 718 relates to a vehicle communication system for a tollgate.

US 2004/203390 A1 relates to a dedicated short-range communication on-vehicle apparatus easily attachable on a wind shield of the motor vehicle including an antenna, a radio module, a data processing unit and others contained in a single box-like housing. CA-A1-2 439 064 relates to a motorcycle with a front cowl and a windscreen. In a windshield apparatus for a motorcycle in which wind blown to the motorcycle during travelling is supplied toward the inside of a windscreen for preventing generation of negative pressure inside the same, to keep a good appearance of the front surface of the vehicle so as to keep an air vent hole away from people's attention. A front handle cover includes an upper half that is inclined so that the front surface faces upward and a lower half that is inclined so that the front surface faces downward connected with respect to each other, an air vent hole is formed on the lower half, an upper handle cover with the front edge thereof abutted against, or placed in the vicinity of, the inner surface of the windscreen are formed with a number of air injection holes opening along the inner surface of the windscreen, and an air guide plate for guiding wind blowing onto the motorcycle during travel and taken through the air vent hole into the air injection holes is disposed between the front handle cover and the upper handle cover.

It is an object of the present invention to provide a mounting structure for a comfortable location for a part of a communication device on the motorcycle, and a motorcycle having a mounting structure. This object is solved by the motorcycle having the mounting structure according to claim 1. Further embodiments of the invention are defined in the dependent claims.

A mounting structure of a motorcycle communication device according to the present invention is used for performing transmission and reception of specific information between a motorcycle and the outside by radio, and has the following features.

First feature: There is provided a motorcycle having a mounting structure comprising a motorcycle communication device which is able to perform transmission and reception of specific information between a motorcycle and the outside by radio, and has an insertion slot into which a card storing predetermined information is insertable, the motorcycle further comprising: a storage box including a space for storing an item, and an openable and closable lid that covers the space; a switch for detecting the opening/closing state of the lid; and a light that is provided inside the storage box and turns on when the lid is opened, i.e. when opening of the lid is detected by said switch, and illuminates the insertion slot. The motorcycle communication device is provided inside the storage box.

According to this configuration, the motorcycle communication device is illuminated by the light that turns on when the lid is opened, thereby allowing easy card insertion and withdrawal even in a dark place during nighttime or the like. Further, the motorcycle communication device is provided inside the storage box, thereby achieving superior environmental resistance.

Second feature: When the insertion slot and the light are provided in the same wall surface, the insertion slot can be readily illuminated by the light.

Third feature: When the insertion slot is provided so as to be oriented in the direction of the light, the insertion slot can be readily illuminated by the light.

Fourth feature: The storage box is provided under the seat, the seat also serves as the lid, and the insertion slot is provided so as to be oriented upward. In this case, since the seat covers the top of the storage box, upon opening the seat, the insertion slot of the motorcycle communication device is oriented toward the top opening, thereby facilitating card insertion and withdrawal.

Fifth feature: The motorcycle communication device is provided in a side wall surface inside the storage box opposite to a side where a side stand is provided. Accordingly, when the motorcycle is being parked in a slightly tilted position by the side stand, the surface on the opposite side is at the most visible location from an occupant, so the insertion slot can be readily checked visually.

Next, a motorcycle communication device not forming part of the claimed invention may have the following features.

There is provided a motorcycle communication device which performs transmission and reception of specific information between a motorcycle and the outside by radio, and has an insertion slot into which a card storing predetermined information is inserted, including: an openable and closable lid that covers the insertion slot; detection means for detecting opening of the lid; and a light that turns on when opening of the lid is detected by the detection means.

According to this configuration, the motorcycle communication device is illuminated by the light that turns on when the lid is opened, thereby allowing easy card insertion and withdrawal even in a dark place. Further, since the insertion slot is normally covered by the lid, it is possible to prevent intrusion of water droplets or dust from the insertion slot, thereby achieving superior environmental resistance.

When the light is provided to the lid, the structure on the main body side can be made compact, and the vicinity of the insertion slot can be broadly illuminated.

Moreover, an antenna mounting structure for an antenna to be preferably used in conjunction with before mentioned communication device for a motorcycle may have the following features.

There is provided an antenna mounting structure for a motorcycle, including: a front cowl that covers at least a front side of a center portion of a handlebar in the motorcycle; a wind screen provided above the front cowl; an air guide passage that is open to the front cowl and provided between the front cowl and the handlebar, the air guide passage communicating with a back surface side of the wind screen; and an antenna that performs transmission and reception of specific information between the motorcycle and the outside. The antenna is provided in the air guide passage.

According to this structure, most of the running wind flows from the front cowl toward the front surface of the wind screen, and there is little increase in air resistance. Further, since only a proper amount of wind flows in the air guide passage, no excessive wind pressure is exerted on the antenna. Further, the antenna is provided at the most front and fairly upper position of the motorcycle, and no blocking object is present in between the antenna and the transmitter-receiver device at a toll gate or the like, good transmission and reception sensitivity are thereby achieved.

A recess may be provided in the air guide passage, and the antenna may be arranged in the recess. This facilitates mounting of the antenna, without narrowing the air guide passage.

A cover for covering the antenna may be provided to the recess. This makes it easier for air to flow through the air guide passage.

In the mounting structure of a motorcycle communication device according to the present invention, the motorcycle communication device is illuminated by the light that turns on when the lid is opened, thereby allowing easy card insertion and withdrawal even in a dark place during nighttime or the like. Further, the motorcycle communication device is provided inside the storage box, thereby achieving superior environmental resistance.

The motorcycle communication device may be illuminated by the light that turns on when the lid is opened, thereby allowing easy card insertion and withdrawal even in a dark place. Further, since the insertion slot is normally covered by the lid, it is possible to prevent intrusion of water droplets or dust from the insertion slot, thereby achieving superior environmental resistance.

In the antenna mounting structure for a motorcycle, most of the running wind flows from the front cowl toward the front surface of the wind screen, and there is little increase in air resistance. Further, since only a proper amount of wind flows in the air guide passage, no excessive wind pressure is exerted on the antenna. Further, the antenna is provided at the most front and fairly upper position of the motorcycle, and no blocking object is present in between the antenna and the transmitter-receiver device at a toll gate, good transmission and reception sensitivity are thereby received.

Figure 1 is a side view of a motorcycle according to a first embodiment.
Figure 2 is a perspective view of the motorcycle as shown in figure 1.
Figure 3 is a perspective view of the motorcycle as shown in figure 1 with a storage box exposed by opening a riding seat.
Figure 4 is a schematic view showing an ETC system and an ETC gate.
Figure 5 is a perspective view showing the mounting structure of a motorcycle communication device according to a first embodiment.
Figure 6 is a schematic front view of a motorcycle as parked in a slightly tilted position by a side stand, with a riding seat opened.
Figure 7 is a schematic plan view of a storage box with a riding seat opened.
Figure 8 is a partially sectional front view of a back mirror.
Figure 9 is a sectional side view of a back mirror.
Figure 10 is an exploded perspective view of an antenna and mounting posts.
Figure 11 is a perspective view of a motorcycle communication device according to a non-claimed example.
Figure 12 is a perspective view of a motorcycle communication device according to a modification of the non-claimed example.
Figure 13 is a side view of a motorcycle according to an non-claimed example.
Figure 14 is a perspective view of the motorcycle as shown in figure 13.
Figure 15 is a perspective view of a front portion of the motorcycle as shown in figure 13.
Figure 16 is a sectional side view of a front portion of the motorcycle as shown in figure 13.
Figure 17 is a perspective view of a meter unit.
Figure 18 is a sectional side view showing a mounting structure according to this non-claimed example.
Figure 19 is a schematic view also showing an ETC system and an ETC gate.
Figure 20 is a sectional side view showing a mounting structure according to a first modification.
Figure 21 is a sectional side view showing a mounting structure according to a second modification.
Figure 22 is a sectional side view showing a mounting structure according to a third modification.
Figure 23 is a perspective view showing a mounting structure according to a fourth modification.

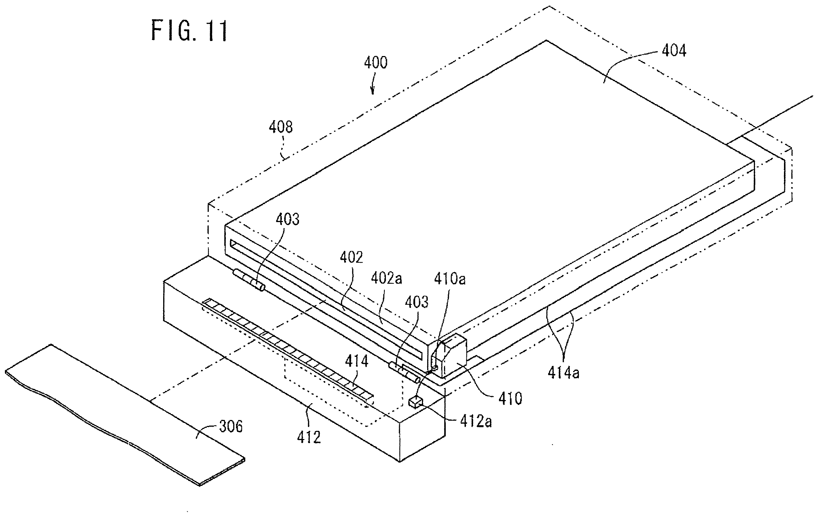

Figs. 11 to 23 do not form part of the claimed invention.

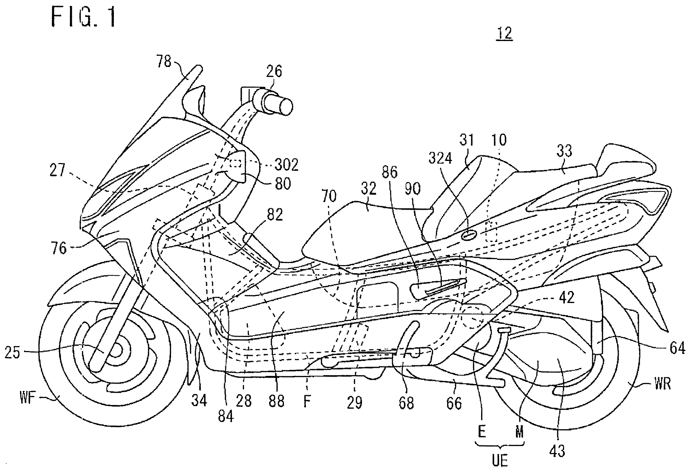

A motorcycle communication device and a mounting structure thereof according to the present invention will be described below by way of embodiments with reference to the attached Figs. 1 to 10. A motorcycle communication device 10 according to a first embodiment is mounted in a motorcycle (vehicle) 12 (see Fig. 1). First, the motorcycle 12 will be described. It should be noted that in the following description, the left/right direction of the motorcycle 12 is defined with reference to a state as viewed from an occupant sitting astride the seat.

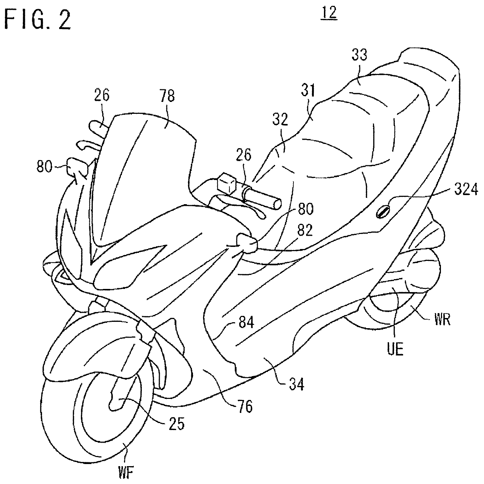

As shown in Figs. 1 and 2, the motorcycle 12 is a scooter-type motorcycle, and includes at its front end a front fork 25 to which a front wheel WF is journaled, and a head pipe 27 on which a handlebar 26 connected to the front fork 25 is steerably supported. A unit swing housing UE supporting a rear wheel WR at its rear end is supported on the longitudinally intermediate portion of a body frame F so as to be vertically swingable. A fuel tank 28 and a radiator 29 arranged in rear of the fuel tank 28 are mounted to the body frame F at a position in front of the unit swing engine UE. Further, a riding seat 31 of a tandem structure having a front seat 32 and a rear seat 33 is arranged in a rear portion of the body frame F. Further, a body cover 34 made of synthetic resin is attached to the body frame F so as to cover the body frame F, the front portion of the swing unit engine UE, the fuel tank 28, and the radiator 29.

The unit swing engine UE includes a water-cooled engine E whose cylinder axis is substantially horizontal, and a belt-type continuously variable transmission M for transmitting the output of the engine E to the rear wheel WR through continuous speed variation by a transmission belt and a pulley. The continuously variable transmission M serves to continuously vary the gear ratio by driving a movable pulley on the crankshaft side in accordance with the actuation of a gear-shifting electric motor 42.

A transmission case 43 of the continuously variable transmission M is provided continuously on the left side of a crankcase 44 in the engine E so as to jut out to the left side from the engine E, and extended to the left side of the rear wheel WR. Further, the front end portion of a swing arm (not shown) is coupled to the right side of the crankcase 44. The rear wheel WR is journaled between the rear end portion of the transmission case 43 and the rear end portion of the swing arm.

The upper end portions of a pair of left and right rear cushions 64 are connected to the rear end portion of the body frame F. The lower ends of both the rear cushions 64 are connected to the rear end portion of the transmission case 43 and the rear end portion of the swing arm.

The motorcycle 12 is provided with a main stand 66 and a side stand 68 for keeping the motorcycle 12 upright during parking.

Since traffic is on the left side of the road in Japan and hence an occupant typically mounts and dismounts a motorcycle from the left side, the side stand 68 is provided on the left side to allow easy operation of the stand. The side stand 68 allows the motorcycle 12 to stand on its own while being tilted slightly to the left.

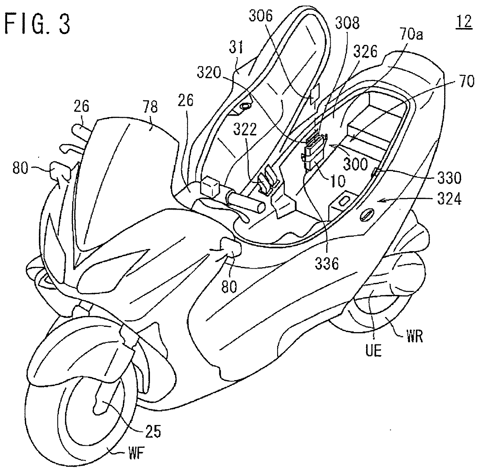

As shown in Fig. 3, a storage box 70 for storing items is provided below the riding seat 31, and extends from below the front end of the riding seat 31 to the vicinity of the upper portion of the rear cushion 64. The riding seat 31 doubles as a lid for covering the top of the storage box 70. The space 70a in the interior of the storage box 70 is exposed by pulling up the riding seat 31 to the right side. The detailed configuration of the storage box 70 will be described later.

Of the front cover 34, a front cowl 76 includes at its upper portion a transparent wind screen 78 and a pair of left and right back mirrors (also called rear view mirrors) 80. An inner cover 82 includes a leg shield 84 that covers the front portion of the legs of a rider, and a step holder 86. The step holder 86 is arranged adjacent to a rear portion of a center cover 88, with a pillion step 90 on which a passenger places his/her foot attached in such a way that the pillion step 90 can be retracted and exposed.

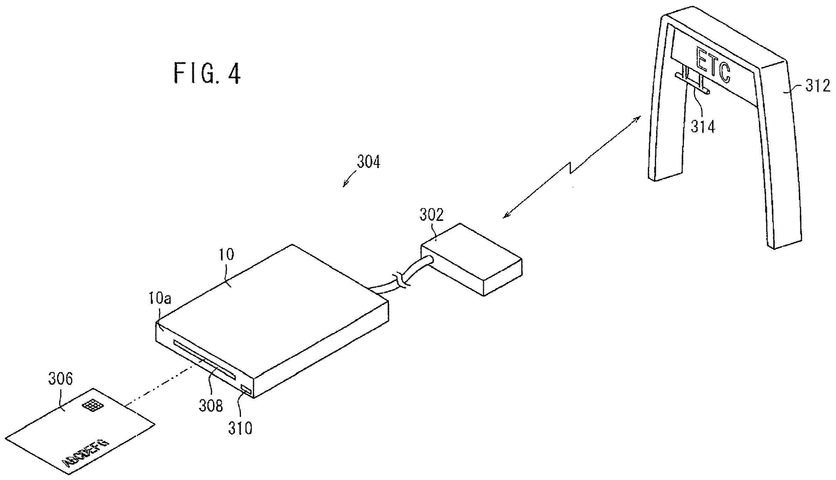

Next, the motorcycle communication device 10 and a mounting structure 300 thereof according to the first embodiment will be described with reference to Figs. 4 to 10.

As shown in Fig. 4, the motorcycle communication device 10 constitutes an ETC system 304 together with an antenna 302. The motorcycle communication device 10 is of a thin plate shape, and has at its narrow end face 10a an insertion slot 308 allowing insertion or withdrawal of a card 306, and an eject switch 310. The eject switch 310 is a switch used for ejecting the card 306 inserted in the motorcycle communication device 10.

In the card 306, information on the user, the bank account for paying road tolls, and so on are encrypted and stored in an internal IC chip. The card 306 is read by the motorcycle communication device 10.

As a vehicle passes through a toll gate on a toll road, the ETC system 304 automatically communicates with a transmitter/receiver device 314 of an ETC gate 312 provided at the toll gate, reads information recorded in the card 306, and notifies the transmitter/receiver device 314 of the read information, together with information on the section of the toll road traveled and information on the vehicle type, the card company, and so on. Accordingly, the transmitter/receiver device 314 determines the road toll for the vehicle in question, and carries out predetermined processing for charging the road toll to a predetermined card company. The use of the ETC system 304 as described above eliminates the need for the motorcycle 12 to stop at a toll gate, thereby making it possible to reduce congestion.

The antenna 302 performs communication with the transmitter/receiver device 314 of the ETC gate 312, on the basis of an ASK modulation scheme using a high-frequency band of 5.8 MHz and at a communication speed of 1024 kbps, for example. The antenna 302 is formed compact since it is used to perform high-frequency and short-distance transmission and reception.

The motorcycle communication device 10 of the ETC system 304 is provided inside the storage box 70, and the antenna 302 is provided inside one of the left and right back mirrors 80.

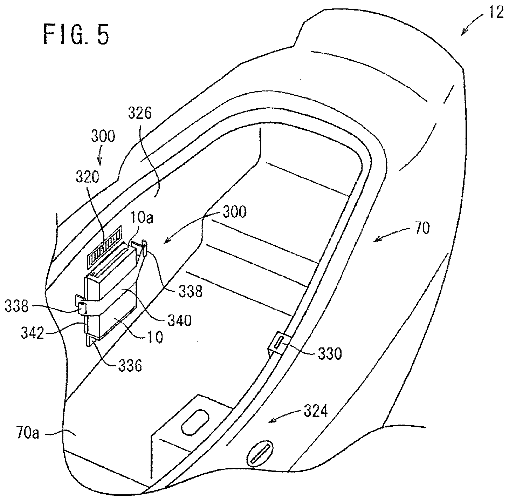

As shown in Fig. 5, the mounting structure 300 has the storage box 70, the motorcycle communication device 10, and a light 320.

As the light 320, there may be used, for example, an electric bulb, an LED (Light Emitting Diode), or EL (electroluminescence).

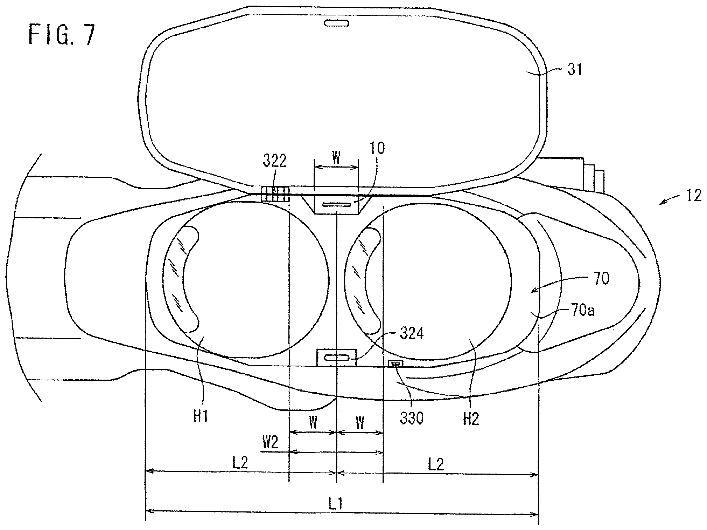

The storage box 70 includes the space 70a for storing items, and the riding seat 31 serving as an openable and closable lid for covering the space. The storage box 70 has a volume allowing storage of two full-face helmets H1 and H2 (see Fig. 7) arranged side by side in the front-to-rear direction. The riding seat 31 is pivotable about a hinge 322 (see Fig. 3) provided on the right side, and can be fixed in place by a key lock 324 in a state with the riding seat 31 tilted down to the left side to cover the space 70a. In this state, the space 70a is substantially hermetically closed, thereby making it possible to prevent intrusion of water droplets and dust from the outside. The lock mechanism for the riding seat 31 is not limited to the key lock 324 but may be one that is automatically locked/unlocked by a keyless entry system, for example.

The storage box 70 has a horizontally elongated light 320 provided at a somewhat high position at substantially the center of a right wall surface 326 in the space 70a, the motorcycle communication device 10, and a switch 330 that detects the opening/closing state of the riding seat 31.

The switch 330 is provided at the upper end portion of the left side surface in the space 70a, and is arranged such that upon tilting down the riding seat 31, the switch 330 can be operated by an end portion of the riding seat 31, thus enable detection of the opening/closing state of the riding seat 31. The light 320 operates in conjunction with the switch 330. The light 320 is turned on upon tilting down the riding seat 31, and is turned off upon tilting up the riding seat 31. The interior of the storage box 70 is thus illuminated by the light even in a dark place at nighttime or the like, thereby facilitating retrieval of the helmet or the like. Further, since the light 320 is turned off while the riding seat 31 is closed, there is no wastage of illumination electric power resulting from the light 320 being kept turned on unnecessarily.

The motorcycle communication device 10 is fixed onto the right wall surface 326 at a position slightly below the light 320 while having its broad surface abutted on the right wall surface 326, so that its end face 10a provided with the insertion slot 308 is located at the top. A support bracket 336 is provided below the motorcycle communication device 10, and hooks 338 are provided on the left and right thereof. A rubber belt 340 is run between these hooks 338, thus fixing the motorcycle communication device 10 in place. The spacing between the two hooks 338 is set somewhat large so as to allow fixation of the motorcycle communication device 10 of varying width. A vibration-damping member 342 is provided on the right wall surface 326, thereby making it possible to suppress transmission of vibration to the motorcycle communication device 10.

Since the insertion slot 308 is oriented in the direction of the light 320, the insertion slot 308 is readily illuminated by the light 320. The light 320 is horizontally elongated, and the insertion slot 308 is arranged along the long side of the light 320, so the entire insertion slot 308 is illuminated.

It should be noted that in situations where the insertion slot 308 cannot be arranged in the vicinity of the light 320 due to layout reasons, a light guide member may be provided to guide the light beam from the light 320 to the vicinity of the insertion slot 308.

Further, the opening of the insertion slot 308 is oriented upward, thereby facilitating insertion and withdrawal of the card 306.

Since the insertion slot 308 and the light 320 are provided on the same right wall surface 326, a light-shielding object is unlikely to be present therebetween, so the insertion slot 308 is readily illuminated by the light 320.

Since the space 70a in the storage box 70 becomes substantially hermetically closed upon tilting down the riding seat 31, intrusion of water droplets and dust into the motorcycle communication device 10 is prevented, thereby achieving superior environmental resistance.

Since the storage box 70 is locked with the key lock 324, and the interior of the storage box 70 becomes invisible from the outside, it cannot be seen from the outside that the motorcycle communication device 10 is mounted.

Since the storage box 70 is often used for storing the helmets H1, H2, the riding seat 31 is frequently tilted up to open at the beginning and at the end of driving of the motorcycle 12. Therefore, rather than opening and closing the riding seat 31 only for the insertion and withdrawal of the card 306, these opening and closing operations can be performed in conjunction with the retrieval and storage of the helmets H1, H2, thereby simplifying the procedure.

Since the riding seat 31 is lifted up to the right side, an occupant inserts his/her hand into the storage box 70 to retrieve an item. At this time, since the light 320 is provided in a somewhat upper portion of the right wall surface 326, the light 320 is not covered by the hand, so the interior of the storage box 70 is appropriately illuminated.

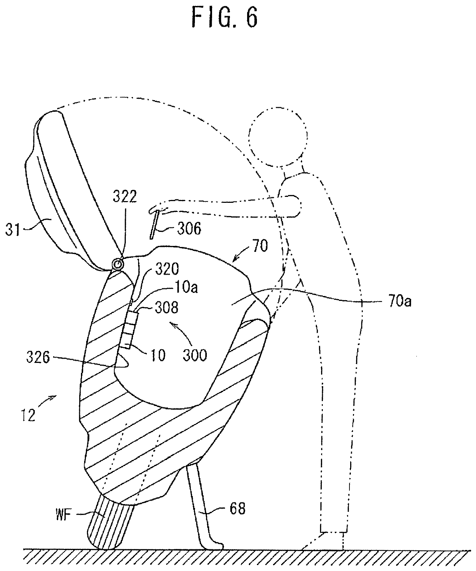

Further, as shown in Fig. 6, the motorcycle 12 can be parked in a state slightly tilted to the left side (the right side in Fig. 6) by means of the side stand 68, so the insertion slot 308 is oriented in the direction of the occupant standing just to the left thereof. Further, the right wall surface is at the most visible location from the left side, so the insertion slot 308 can be readily checked visually. Of course, when the side stand 68 is provided on the right side, the motorcycle communication device 10 may be provided on the left side.

As shown in Fig. 7, when the opening of the storage box 70 is viewed from the top, the motorcycle communication device 10 is provided at substantially the central position in the direction of the vehicle length. Accordingly, even when two helmets H1, H2 are stored, the motorcycle communication device 10 is arranged in a gap therebetween, and thus no interference occurs. Therefore, two large-sized helmets H1, H2 can be reliably stored. Here, when the width of the motorcycle communication device 10 is taken as W, the substantially central position can be defined as falling within the range of ±W to the front and the rear, that is, W2 with reference to the center (at the position of a length L2 from either end) of the length L1 of the storage box 70. That is, by placing the motorcycle communication device 10 so as to fall within the range of W2, it is possible to prevent its interference with the two helmets H1, H2.

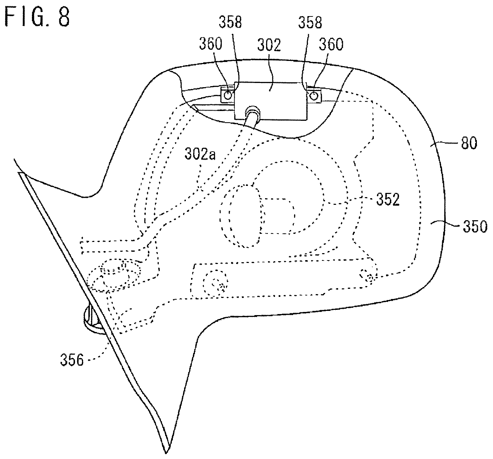

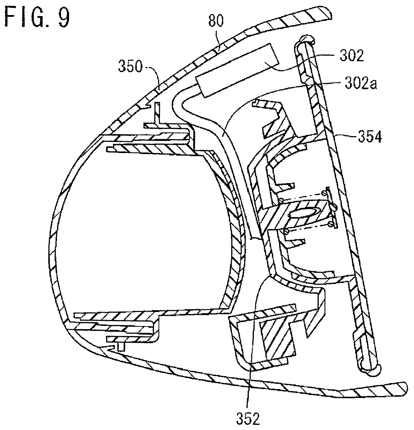

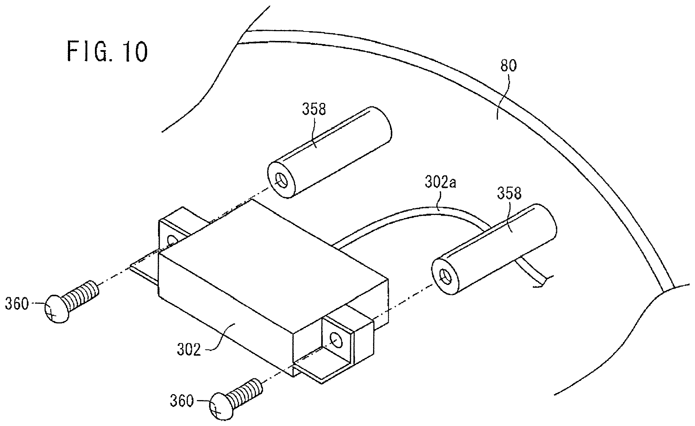

As shown in Figs. 8 and 9, the back mirror 80 is provided integrally with the front cowl 76 (see Fig. 1), and is formed of a resin cover 350 as its base. The back mirror 80 has a core 352, a mirror 354, a tiltable mechanism 356, and the antenna 302, inside the cover 350. The mirror 354 is capable of tilting in an arbitrary direction about the core 352. The antenna 302 is provided in an upper portion of the space between the core 352 and the mirror 354. As shown in Fig. 10, two posts 358 that project substantially horizontally are provided in an upper portion of the inner surface of the cover 350. The antenna 302 is fixed to the posts 358 with screws 360.

In this way, the antenna 302 can be arranged by making effective use of the space inside the cover 350. Further, since the back mirror 80 is provided substantially at the front of the motorcycle 12 (see Fig. 1), and the cover 350 is made of resin, there is little attenuation of radio waves, thereby enabling reliable transmission and reception.

The antenna 302 itself is covered by the cover 350 and cannot be seen from the outside. In addition, a cable 302a connected to the antenna 302 is directly led into the front cowl 76 from the cover 350, so no portion is exposed to the outside. Furthermore, as descried above, the motorcycle communication device 10 is arranged so as to be invisible from the outside when the riding seat 31 is closed. It follows that the ETC system 304 is arranged so as to be entirely invisible from the outside. It is thus impossible for an outsider to tell if a motorcycle is equipped with the ETC system, and also an improvement can be achieved in terms of environmental resistance performance such as waterproof property, dust-proof property, and the like. Further, since the mounting of the ETC system 304 does not result in formation of an unnecessary protrusion, there is no deterioration in aerodynamic performance and aesthetic marketability.

It should be noted that although the back mirror 80 is provided on the left side in shown in Figs. 8 and 9, the antenna 302 may be provided to the back mirror 80 on the right side.

The motorcycle communication device 10 and its mounting structure 300 configured as described above operate as follows.

First, before riding the motorcycle 12, an occupant tilts up the riding seat 31 to expose the space 70a of the storage box 70, and inserts the card 306 into the insertion slot 308 of the motorcycle communication device 10 provided on the right wall surface 326. At this time, since the light 320 is turned on under the action of the switch 330, the insertion slot 308 is illuminated even in a dark place, thereby facilitating insertion of the card 306.

Further, the helmets H1, H2 to be worn by an occupant are stored in the storage box 70, and it is common for the occupant to tilt up the riding seat 31 before riding due to the necessity of storing hand luggage. The card 306 may simply be inserted into the insertion slot 308 at this time, thus simplifying the procedure.

The motorcycle communication device 10 reads from the inserted card 306 information on the user, the bank account for the payment of a road toll, and the like.

Next, the occupant closes the riding seat 31, and straddles the riding seat 31 to start the driving of the motorcycle 12. As the motorcycle 12 enters and exits a toll road such as an expressway, the motorcycle communication device 10 communicates with the transmitter/receiver device 314 at the ETC gate 312 via the antenna 302 and, as described above, exchanges information on the user, the bank account for the payment of a road toll, the section of the toll road traveled, the vehicle type, the card company, and the like. The transmitter/receiver device 314 thus performs processing for charging the road toll to a predetermined card company.

When finishing the driving of the motorcycle 12 upon arrival at a destination, after the motorcycle 12 is brought to a stop, the riding seat 31 is tilted up, and the eject switch 310 of the motorcycle communication device 10 is pressed to withdraw the card 306. At this time, the eject switch 310 is illuminated by the light 320 provided at the end face 10a, thereby facilitating operation in a dark place. Upon the operation on the eject switch 310, the card 306 is ejected to a degree not dropping out, and is pulled out by the occupant. Since the end face 10a is oriented upward, the card 306 is prevented from inadvertently falling off.

Thereafter, the riding seat 31 is closed and locked with the key lock 324 for parking. During parking, the ETC system 304 is not exposed to the outside, and superior environmental resistance is achieved.

While the above-mentioned mounting structure 300 is applied to the motorcycle 12, the mounting structure 300 may applied to an automobile (not forming part of the claimed invention). That is, in the case of an automobile as well, the room light is turned off while the door is closed, and the interior of the automobile is fairly dark at nighttime. Accordingly, the insertion slot 308 may be illuminated by the light 320 of the above-mentioned mounting structure 300. In this case, it is possible to provide the motorcycle communication device 10 inside the dashboard, with the light 320 turned on and off in conjunction with the opening and closing of the front cover of the dashboard.

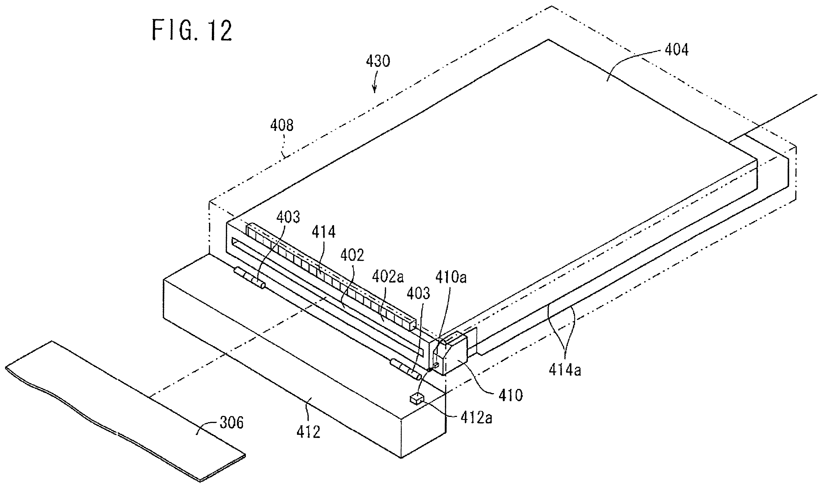

Next, referring to Figs. 11 and 12, description will be given of a motorcycle communication device 400, and a motorcycle communication device 430 according to a modification thereof.

As shown in Fig. 11, the motorcycle communication device 400 includes a main body device 404 having an insertion slot 402 into which the card 306 is inserted, a case 408 that covers the main body device 404, a micro switch 410 having an operation member 410a disposed in a surface 402a in which the insertion slot 402 is provided, an openable and closable cover (lid) 412 for covering the surface 402a, and a horizontally elongated cover light 414 provided to the cover 412. It should be noted that in Figs. 11 and 12, the case 408 is indicated by an imaginary line so that the main body device 404 and the micro switch 410 are visible.

The cover 412 has an elongate shape covering the entire surface 402a, and is pivotable about a hinge 403 provided on the long side of the cover 413. The main body device 404 is enclosed in the case 408 substantially hermetically, thereby making it possible to prevent intrusion of water droplets and dust from the outside. When closed, the cover 412 is automatically locked by a locking mechanism (not shown), and can be unlocked to open when pressed again.

The cover light 414 is provided in the surface of the cover 412 which covers the surface 402a, at a position shifted to the opposite side from the hinge 403 and along the extending direction of the insertion slot 402. The entire insertion slot 402 is thus illuminated by the cover light 414. As the cover light 414, there may be used, for example, an electric bulb, an LED, or EL.

The cover 412 is provided with a protrusion 412a that presses the operation member 410a of the micro switch 410 when the cover 412 is closed.

The micro switch 410 is provided by the side of the main body device 404, and is so arranged that upon closing the cover 412, the operation member 410a is operated by the protrusion 412a provided to the cover 412, thereby allowing detection of the opening/closing state of the cover 412. The cover light 414 operates in conjunction with the micro switch 410, and is turned off when the cover 412 is closed, and turned on when the cover 412 is opened. The insertion slot 402 is thus illuminated by the light even in a dark place, thereby facilitating insertion and withdrawal of the card 306. Further, since the cover light 414 is turned off while the cover 412 is closed, there is no wastage of illumination electric power resulting from the cover light 414 being kept turned on unnecessarily.

Further, since the cover light 414 is provided to the cover 412, the structure on the main body side can be made compact. In addition, the vicinity of the insertion slot 402 can be broadly illuminated.

As shown Fig. 12, although the motorcycle communication device 430 according to the modification is of basically the same configuration as the motorcycle communication device 400, the cover light 414 is provided in a gap between the main body device 404 and the case 408 in the surface 402a. In the motorcycle communication device 430 as described above, a power line 414a connected to the cover light 414 can be received within the case 408, thus facilitating wiring.

In the motorcycle communication devices 400 and 430 as described above, the insertion slot 402 is illuminated by the cover light 414 in conjunction with the opening of the cover 412, thereby facilitating insertion and withdrawal of the card 306.

Further, the motorcycle communication devices 400 and 430 provide superior environmental resistance because the main body device 404 is covered by the case 408 and the cover 412, thus allowing mounting at various locations in the motorcycle 12.

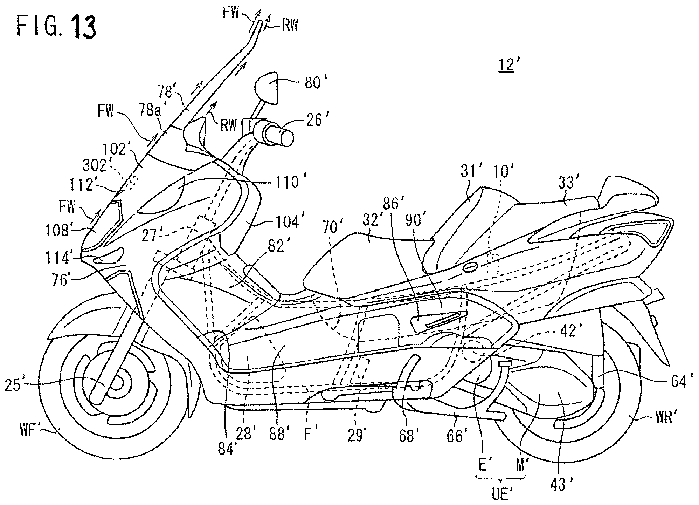

An antenna mounting structure for an antenna to be preferably used in conjunction with the above described communication device for a motorcycle will be described below with reference to the attached Figs. 13 to 23. An antenna mounting structure according to this example includes a motorcycle communication device 10', and is mounted in a motorcycle (vehicle) 12' (see Fig. 13). First, the motorcycle 12' will be described. It should be noted that in the following description, the left/right direction of the motorcycle 12' is defined with reference to a state as viewed from an occupant sitting astride the seat.

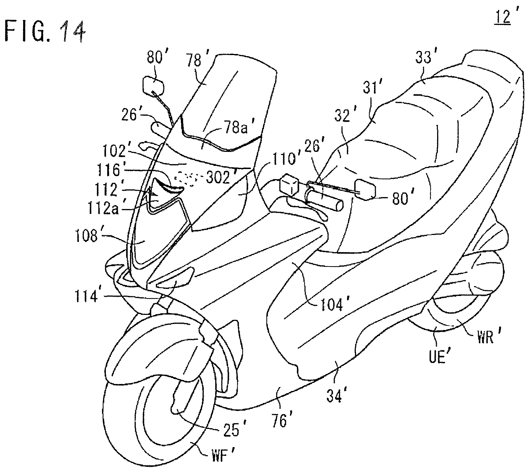

As shown in Figs. 13 and 14, the motorcycle 12' is a scooter-type motorcycle, and includes at its front end a front fork 25' to which a front wheel WF' is journaled, and a head pipe 27' on which a handlebar 26' connected to the front fork 25' is steerably supported. A unit swing housing UE' supporting a rear wheel WR' at its rear end is supported on the longitudinally intermediate portion of a body frame F' so as to be vertically swingable. A fuel tank 28' and a radiator 29' arranged in rear of the fuel tank 28' are mounted to the body frame F' at a position in front of the unit swing engine UE'. Further, a riding seat 31' of a tandem structure having a front seat 32' and a rear seat 33' is arranged in a rear portion of the body frame F'. Further, a body cover 34' made of synthetic resin is attached to the body frame F' so as to cover the body frame F', the front portion of the swing unit engine UE', the fuel tank 28', and the radiator 29'.

The unit swing engine UE' includes a water-cooled engine E' whose cylinder axis is substantially horizontal, and a belt-type continuously variable transmission M' for transmitting the output of the engine E' to the rear wheel WR' through continuous speed variation by a transmission belt and a pulley. The continuously variable transmission M' serves to continuously vary the gear ratio by driving a movable pulley on the crankshaft side in accordance with the actuation of a gear-shifting electric motor 42'.

A transmission case 43' of the continuously variable transmission M' is provided continuously on the left side of a crankcase 44' in the engine E' so as to jut out to the left side from the engine E', and extended to the left side of the rear wheel WR'. Further, the front end portion of a swing arm (not shown) is coupled to the right side of the crankcase 44'. The rear wheel WR' is journaled between the rear end portion of the transmission case 43' and the rear end portion of the swing arm.

The upper end portions of a pair of left and right rear cushions 64' are connected to the rear end portion of the body frame F'. The lower ends of both the rear cushions 64' are connected to the rear end portion of the transmission case 43' and the rear end portion of the swing arm.

The motorcycle 12' is provided with a main stand 66' and a side stand 68' for keeping the motorcycle 12' upright during parking.

Since traffic is on the left side of the road in Japan and hence an occupant typically mounts and dismounts a motorcycle from the left side, the side stand 68' is provided on the left side to allow easy operation of the stand. The side stand 68' allows the motorcycle 12' to stand on its own while being tilted slightly to the left.

A storage box 70' for storing items is provided below the riding seat 31', and extends from below the front end of the riding seat 31' to the vicinity of the upper portion of the rear cushion 64'. The riding seat 31' doubles as a lid for covering the top of the storage box 70'. The space in the interior of the storage box 70' is exposed by pulling up the riding seat 31' to the right side.

Of the front cover 34', a front cowl 76' includes a transparent wind screen 78' at its upper portion. A pair of left and right back mirrors 80' are provided to the handlebar 26'. An inner cover 82' includes a leg shield 84' that covers the front portion of the legs of a rider, and a step holder 86'. The step holder 86' is arranged adjacent to a rear portion of a center cover 88', with a pillion step 90' on which a passenger places his/her foot attached in such a way that the pillion step 90' can be retracted and exposed.

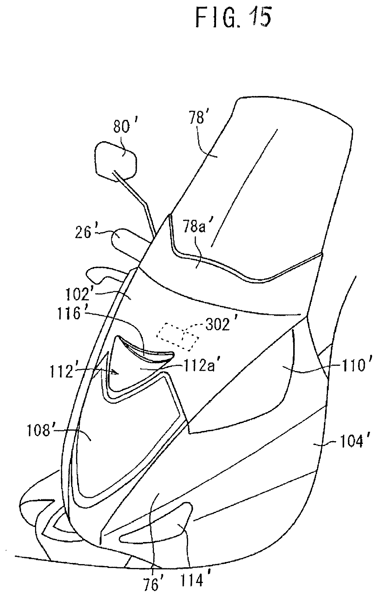

As shown in Fig. 15, the front portion of the body cover 34' forms a front cowl 76'. The front cowl 76' entirely covers the center portion of the handlebar at the front of the motorcycle 12' (that is, a stem 122'), a meter unit 126', the head pipe 27' and the like so as to reduce air resistance, and forms a smoothly curved surface whose width decreases toward the distal end.

The front cowl 76' has a center garnish 102', a side portion 104' that juts out to the left and right, and a wind screen 78' provided above the center garnish 102'. The center garnish 102' and the wind screen 78' are integrally and smoothly connected with each other, thus allowing running wind to readily flow from the center garnish 102' toward the wind screen 78'.

The wind screen 78' provides a wind shielding effect with respect to an occupant and an effect of reducing flow resistance during running. Substantially the entire surface of the wind screen 78' is transparent, thus affording the occupant good visibility. Only a lower portion 78a' of the wind screen 78' is painted black to an extent not impairing visibility, thus providing a sunshade effect with respect to the meter unit 126' on the inner side and an effect on exterior design.

The center garnish 102' has a headlight 108' at the central distal end portion, winker lamps 110' provided at somewhat high positions on the left and right, an air-guide inlet 112' provided above the headlight 108', and a pair of small air-guide inlets 114' positioned on the left and right at the distal end. The air-guide inlet 112' includes a bottom surface 112a', and has a downwardly convex triangular shape. The bottom surface 112a' is formed so as to become deeper as it extends upward and as it extends toward its center. A narrow opening 116' is provided at the upper end of the air-guide inlet 112'.

The air-guide inlet 112' occupies only a small area relative to the entire area of the front cowl 76', and allows a proper amount of air to be guided to the opening 116' from the bottom surface 112a'.

Like the air-guide inlet 112', the small air-guide inlets 114' allow a proper amount of air to be guided to an opening at the back thereof.

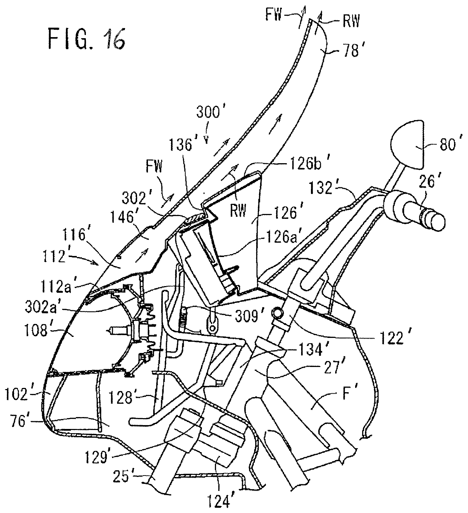

As shown in Fig. 16, inside the front cowl 76', there are provided the head pipe 27', a handlebar stem 122', a fork bridge 124', the meter unit 126', a stay 128', a partition plate 129', and the headlight 108'.

The head pipe 27' is a pipe constituting the front end portion of the frame F', and holds the handlebar stem 122' in a rotatable manner. The upper end portion of the handlebar stem 122' is connected to the central position in the left-right direction of the handlebar 26'. A handlebar cover 132' is provided to the handlebar 26'. The lower end portion of the handlebar stem 122' is connected to the pair of front forks 25'. A bracket 134' for fixing the stay 128' in place is provided to the front surface of the head pipe 27'. The stay 128' is formed by a combination of a plurality of pipes, and supports the meter unit 126', the headlight 108', and the front cowl 76'. The partition plate 129' is mounted below the stay 128', and covers the head pipe 27' and the meter unit 126' from below.

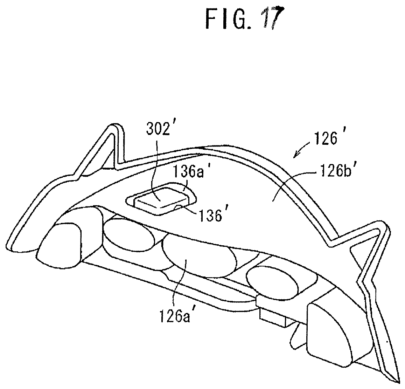

As shown in Fig. 17, the meter unit 126' has a mater body 126a' including a speed meter, a tachometer, a fuel meter, an odometer, and the like, and a meter visor 126b' that covers the upper portion of the meter body 126a'. The meter visor 126b' forms a substantially cylindrical curved surface, with a recess 136' provided at the center. An antenna 302' that will be described later is provided in the recess 136'.

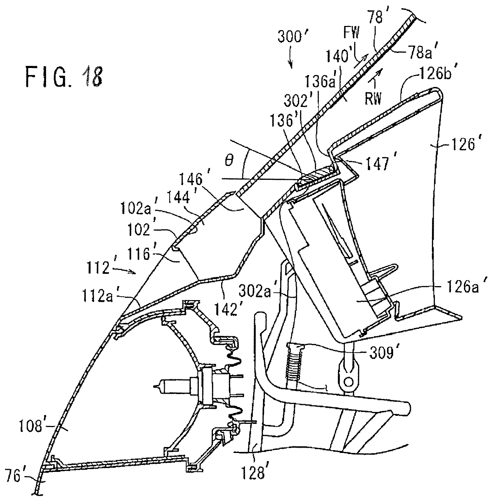

As shown in Fig. 18, the meter unit 126' is arranged inside the windscreen 78', at a position obliquely above and in rear of the air-guide inlet 112'. A narrow gap 140' is formed between the meter visor 126b' and the windscreen 78'. The distal end portion of the meter visor 126b' and the rear end portion of the bottom surface 112a' of the air-guide inlet 112' are connected to each other by a connecting plate 142'. A gap 144' is formed between the connecting plate 142' and an inner surface 102a' at the upper end of the center garnish 102'. Due to this configuration, the opening 116' of the air-guide inlet 112' communicates with the inside of the wind screen 78' via the gap 144' and the gap 140', and the gap 144' and the gap 140' constitute an air guide passage 146' .

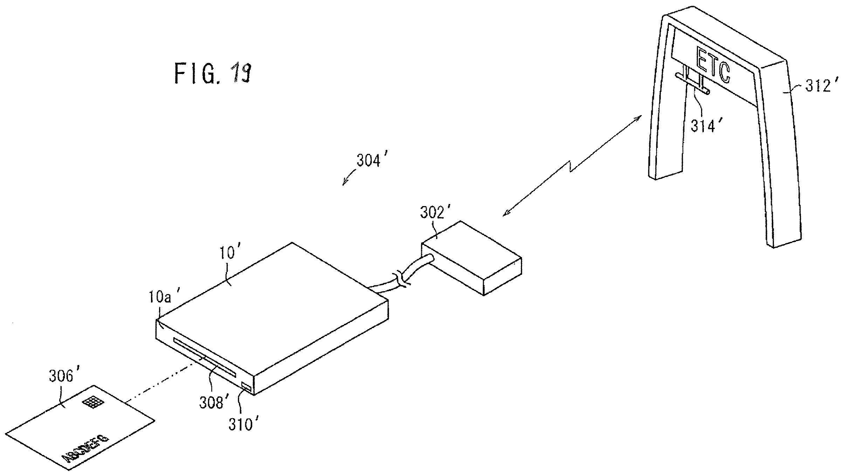

As described above, the antenna 302' is provided in the recess 136' of the meter visor 126b'. The antenna 302' performs communication with a transmitter/receiver device 314' of an ETC gate 312' (see Fig. 19) on the basis of an ASK modulation scheme using a high-frequency band of 5.8 MHz and at a communication speed of 1024 kbps, for example. The antenna 302' is formed compact since it is used to perform high-frequency and short-distance transmission and reception. A vibration-damping member 147' is provided at the bottom of the recess 136', thereby making it possible to suppress transmission of vibration to the antenna 302'.

When a cable 302a' of the antenna 302' is long, the excess portion of the cable 302a' may be wrapped around a nearby post 309' for fixation. The post 309' can be provided to the stay 128' or the meter unit 126'. This prevents the wiring from coming undone later.

As is apparent from Fig. 18, the recess 136' is provided by making effective use of the space between the meter body 126a' and the upper surface of the meter visor 126b'. The recess 136' is shallow at the front, and becomes deeper toward the rear.

The antenna 302' is provided at a front portion of the motorcycle 12', and further, since the motorcycle 12' moves forward, good transmission and reception sensitivity is achieved between the antenna 302' and the transmitter/receiver device 314' (see Fig. 19) located forward of and above the antenna 302'. This is because only the wind screen 78' made of resin and the center garnish 102' are present between the antenna 302' and the transmitter/receiver device 314' and hence there is little attenuation of radio waves.

Not only when the antenna 302' comes as standard equipment but also when the antenna 302' is retrofitted by an occupant, a dealer, or the like, the antenna 302' hardly projects into the air guide passage 146', nor does it project outward from the wind screen 78', of course. Therefore, there is no deterioration in the aerodynamic characteristics of the motorcycle 12', and an improvement is achieved in terms of aesthetic marketability.

Returning to Fig. 13, running wind FW directed toward the front surface of the center garnish 102' enters the air-guide inlet 112', and passes through the air guide passage 146' to flow upward and to the sides from the back surface of the wind screen 78'. A proper amount of this rear-surface flow RW from the back surface of the wind screen 78' merges with a front-surface flow FW that has flown along the front surface of the wind screen 78'. As a result, the negative pressure generated in the back surface of the wind screen 78' becomes small. Accordingly, the force with which the front-surface flow FW is drawn toward the back surface of the windscreen 78' decreases, so the front-surface flow FW goes directly to the rear as it is without going around the edge of the wind screen 78', thus providing enhanced wind shielding effect for the rider.

Next, an ETC system 304' including the antenna 302' will be described with reference to Fig. 19.

As shown in Fig. 19, the antenna 302' constitutes the ETC system 304' together with the motorcycle communication device 10' as similarly shown in Fig. 4 as well. The motorcycle communication device 10' is of a thin plate shape, and has at its narrow end face 10a' an insertion slot 308' allowing insertion or withdrawal of a card 306', and an eject switch 310'. The eject switch 310' is a switch used for ejecting the card 306' inserted in the motorcycle communication device 10'.

In the card 306', information on the user, the bank account for paying road tolls, and so on are encrypted and stored in an internal IC chip. The card 306' is read by the motorcycle communication device 10'.

As a vehicle passes through a toll gate on a toll road, the ETC system 304' automatically communicates with a transmitter/receiver device 314' of an ETC gate 312' provided at the toll gate, reads information recorded in the card 306', and notifies the transmitter/receiver device 314' of the read information, together with information on the section of the toll road traveled and information on the vehicle type, the card company, and so on. Accordingly, the transmitter/receiver device 314' determines the road toll for the vehicle in question, and carries out predetermined processing for charging the road toll to a predetermined card company. The use of the ETC system 304' as described above eliminates the need for the motorcycle 12' to stop at a toll gate, thereby making it possible to reduce congestion.

The motorcycle communication device 10' of the ETC system 304' is provided, for example, inside the storage box 70' (see Fig. 13), and cannot be seen from the outside. Further, as mentioned above, the antenna 302' and the cable 302a' are not exposed to the outside, either. It follows that the ETC system 304' is arranged so as to be entirely invisible from the outside. It is thus impossible for an outsider to tell if a motorcycle is equipped with the ETC system, and also an improvement can be achieved in terms of environmental resistance performance such as waterproof property, dust-proof property, and the like. Further, since the mounting of the ETC system 304' does not result in formation of an unnecessary protrusion, there is no deterioration in aerodynamic performance and aesthetic marketability.

The mounting structure 300' according to this example is constituted by the front cowl 76', the wind screen 78', the air guide passage 146', the recess 136', and the antenna 302'.

The antenna 302' of the ETC system 304' and its mounting structure 300' configured as described above operate as follows.

First, before riding the motorcycle 12', an occupant tilts up the riding seat 31' to expose the storage box 70', and inserts the card 306' into the insertion slot 308' of the motorcycle communication device 10' provided inside the motorcycle 12'. The motorcycle communication device 10' reads from the inserted card 306' information on the user, the bank account for the payment of a road toll, and the like.

Next, the occupant closes the riding seat 31', and straddles the riding seat 31' to start the driving of the motorcycle 12'. Since the antenna 302' is not exposed to the outside, during running of the motorcycle 12', the antenna 302' is not directly hit by running wind but is hit only by a part of the rear-surface flow RW, and hence no excessive wind pressure is exerted on the antenna 302'.

As the motorcycle 12' enters and exits a toll road such as an expressway, the motorcycle communication device 10' communicates with the transmitter/receiver device 314' at the ETC gate 312' via the antenna 302' and, as described above, exchanges information on the user, the bank account for the payment of a road toll, the section of the toll road traveled, the vehicle type, the card company, and the like. The transmitter/receiver device 314' thus performs processing for charging the road toll to a predetermined card company.

At this time, the antenna 302' is provided at a front and upper portion of the motorcycle 12', and is arranged in an orientation that takes the directivity of radio waves into consideration by being fitted in the recess 306'. High transmission and reception sensitivity is thus achieved between the antenna 302' and the transmitter/receiver device 314', thus ensuring reliable communication.

When finishing the driving of the motorcycle 12' upon arrival at a destination, after the motorcycle 12' is brought to a stop, the riding seat 31' is tilted up, and the eject switch 310' of the motorcycle communication device 10' is pressed to withdraw the card 306'. Upon the operation on the eject switch 310', the card 306' is ejected to a degree not dropping out, and is pulled out by the occupant.

As described above, in the mounting structure 300' according to this example , the antenna 302' is not exposed to the outer surface, so most of the running wind flows from the front cowl 76' toward the front surface of the wind screen 78', and there is little increase in air resistance. Further, since only a proper amount of wind flows in the air guide passage 146', no excessive wind pressure is exerted on the antenna 302'. Further, the antenna 302' is provided at the most front and upper position of the motorcycle 12', and no blocking object is present in between the antenna 302' and the transmitter-receiver device at the toll gate, thus achieving good transmission and reception sensitivity.

Further, since the antenna 302' is fixed in place while having its position and orientation regulated by the recess 136', the antenna 302' can be readily installed in an orientation in which the antenna 302' exhibits strong transmission and reception directivity of radio waves with respect to an angle θ (see Fig. 18) at which the transmitter/receiver device 314' is assumed to be present. It is thus possible for an occupant without special knowledge, measuring instrument, jig, and the like to readily install the antenna 302' at a position and in an orientation that ensure high sensitivity. Therefore, it is possible to extend the range of choices in terms of installation companies and personnel.

The antenna 302' hardly projects into the air guide passage 146' and thus does not disturb the rear-surface flow RW passing through the air guide passage 146'. Further, since hardly any rear-surface flow RW hits the antenna 302' and no excess wind pressure is exerted, the mounting strength with respect to the recess 136' and the structure of the recess 136' need not to be excessively increased. Further, provided that the antenna 302' does project somewhat into the air guide passage 146', the rear-surface flow RW flowing in the air guide passage 146' is not as strong as the running wind FW flowing along the front surface of the center garnish 102'. Therefore, only a proper amount of wind flows and hence no excessive wind pressure is exerted on the antenna 302' .

The antenna 302' is positioned fairly at the back of the air guide passage 146' as viewed from the direction of the occupant. The antenna 302' is thus practically invisible and does not obstruct forward vision, nor is the occupant made unnecessarily aware of the presence of the antenna 302'.

Should an excessive wind pressure or external force be unexpectedly exerted on the antenna 302', there is no fear of dislodging of the antenna 302' as it is supported on a step 136a' (see Fig. 18) in the rear surface. Further, since the recess 136' is almost entirely filled with the antenna 302', there is little fear of the rear-surface flow RW being disturbed by the recess 136'.

The antenna 302' is covered by the lower portion 78a' of the wind screen 78' or the center garnish 102' and cannot be seen from the outside. Further, the cable 302a' is directly led into the front cowl 76' from the recess 136'. No portion of the antenna 302' is thus exposed to the outside.

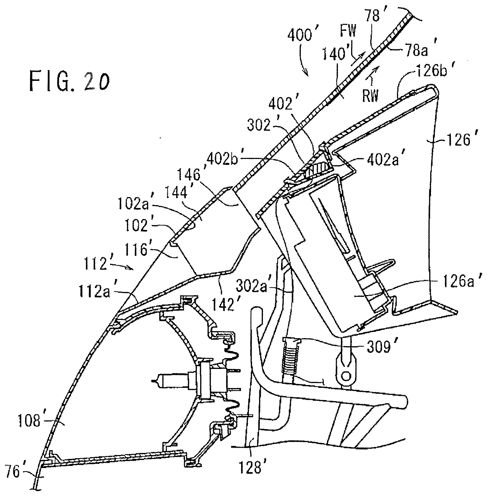

Next, modifications of the mounting structure of the antenna 302' will be described with reference to Figs. 20 to 23. It should be noted that the portions that are the same as those of the above-mentioned mounting structure 300' are noted by the same symbols, and detailed description thereof is omitted. Each of these modifications provides the same effect as that of the above-mentioned mounting structure 300'.

As shown in Fig. 20, in a mounting structure 400' according to a first modification, a cartridge 402' is provided at the location of the above-mentioned recess 136', and the antenna 302' is built in the cartridge 402'. The cartridge 402' is fixed through engagement of a claw 402a' with respect to the meter visor 126b', so the mounting of the cartridge 402' is easy. Further, the cartridge 402' can be detached by releasing the engagement of the claw 402a'. The antenna 302' is separated from the air guide passage 146' by a top cover 402b', and thus not applied with wind pressure.

The top cover 402b' of the cartridge 402' is smoothly connected to the upper surface of the meter visor 126b' so as to be flush with the upper surface. This allows the lower surface of the air guide passage 146' to be formed more smoothly, thus allowing the rear-surface flow RW to readily move.

Since the cartridge 402' holds the antenna 302' so that the antenna 302' does not project into the air guide passage 146', it can be said that the cartridge 402' practically constitutes a recess of the air guide passage 146'. Further, although the antenna 302' does not project into the air guide passage 146' at all, the cartridge 402' forms a part of the air guide passage 146', and the antenna 302' is mounted to the cartridge 402'. This is equivalent to say that the antenna 302' is provided in the air guide passage 146'.

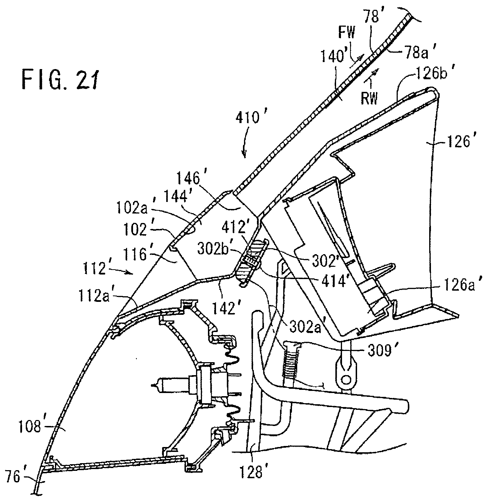

As shown in Fig. 21, in a mounting structure 410' according to a second modification, the antenna 302' is securely fixed with a screw 414' to a boss 412' that projects on the back surface of the connecting plate 142'. No wind pressure is exerted on the antenna 302' since it does not project into the air guide passage 146' at all. Further, the use of the boss 412' eliminates the need for an adhesive, a double-faced tape, or the like, or eliminates the need of additional machining for forming a fixing hole.

Further, as shown in Fig. 21, by providing a screw hole 302b' (or a fixing stay or the like) in the antenna 302', it is unnecessary to provide a separate bracket, thus allowing a reduction in the number of parts.

In this case, although the antenna 302' does not project into the air guide passage 146' at all, the connecting plate 142' forms a part of the air guide passage 146', and the antenna 302' is mounted to the connecting plate 142'. This is equivalent as the antenna 302' being provided in the air guide passage 146'.

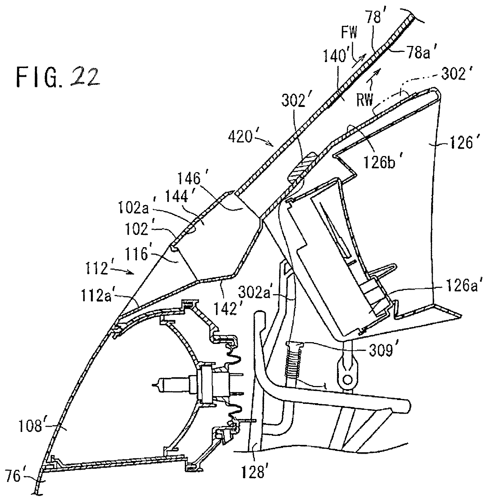

As shown in Fig. 22, in a mounting structure 420' according to a third modification, the above-mentioned recess 136' is not provided, and the antenna 302' is provided directly on the meter visor 126b'. In the case of the above-mentioned mounting structure 420' as well, good sensitivity is achieved because the antenna 302' is provided at a front and upper portion of the motorcycle 12'. Further, since the antenna 302' is provided inside the front cowl 76', no excessive wind pressure is exerted on the antenna 302'.

Further, since the antenna 302' has a compact shape, it does not narrow the air guide passage 146' very much, thus allowing passage of a proper amount of the rear-surface flow RW.

As indicated by a two-dot chain line, the antenna 302' may be provided near the rear end of the meter visor 126b'.

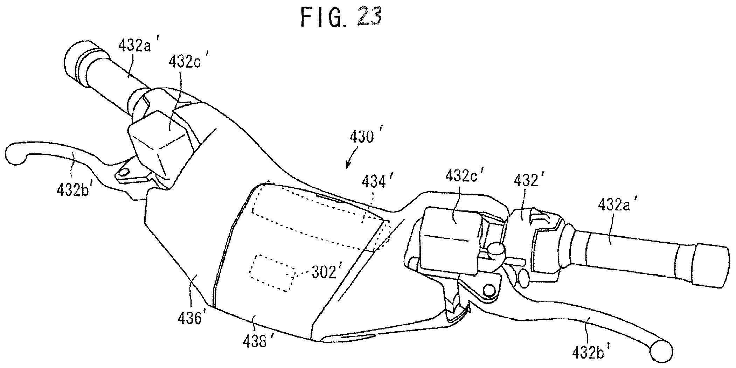

As shown in Fig. 23, in a mounting structure 430' according to a fourth modification, the antenna 302' is provided within a small handlebar cover 436' made of resin which covers a handlebar 432' and a meter panel 434', instead of the large-sized front cowl 76' mentioned above. Within the handlebar cover 436', the antenna 302' is provided in front of the handlebar 432' and the meter panel 434'.

The handlebar cover 436' covers the portion of the handlebar 432' other than a grip 432a', a lever 432b', and a hydraulic unit 432c', and is shaped so as to become lower in height as it extends toward the front. The center portion of the handlebar cover 436' forms a small cover 438' that can be separated from the other portion. The antenna 302' is fixed onto the back surface of the small cover 438'.

In the case of the above-mentioned mounting structure 430' as well, good sensitivity is achieved because the antenna 302' is provided at a front and upper portion of the motorcycle 12'. Further, since the antenna 302' is provided inside the handlebar cover 436', no excessive wind pressure is exerted on the antenna 302'.

It should be noted that the antenna 302' is not necessarily be one used for ETC. The antenna 302' may be one used for, for example, GPS (Global Positioning System).

It is needless to mention that the motorcycle according to the present invention is not limited to that of the above-described embodiment , and can be configured in various ways without departing from the scope of the present invention as defined by the appended claims.

10, 10', 400, 430...Motorcycle communication device
12, 12'...Motorcycle
66...Main stand
68...Side stand
70...Storage box
70a...Space
76, 76'...Front cowl
78'...Wind screen
80...Back mirror
102'...Center garnish
108'...Headlight
112'...Air-guide inlet
116'...Opening
122'...Handlebar stem
126'...Meter unit
126b'...Meter visor
136'...Recess
140', 144'...Gap
142'...Connecting plate
146'...Air guide passage
300...Mounting structure of a communication device
300', 410', 420', 430'...Antenna mounting structure
302, 302'...Antenna
302a'...Cable
304, 304'...ETC system
306, 306'...Card
308, 402...Insertion slot
310...Eject switch
314, 314'...Transmitter/receiver device
320...Light
322, 403...Hinge
324...Key lock
326...Right wall surface
330...Switch
342...Vibration-damping member
404...Main body device
402'...Cartridge
408...Case
410...Micro switch
414...Cover light
434'...Meter panel

## Claims

1. A motorcycle (12) having a mounting structure (300) comprising a motorcycle communication device (10) which is able to perform transmission and reception of specific information between a motorcycle (12) and the outside by radio, and which includes an insertion slot (308) into which a card (306) storing predetermined information is insertable, the motorcycle (12) further comprising:
a storage box (70) including a space (70a) for storing an item, and an openable and closable lid that covers the space (70a), wherein the motorcycle communication device (10) is provided inside the storage box (70);
a switch (330) for detecting the opening/closing state of the lid; and
a light (320) that is provided inside the storage box (70) and turns on when opening of the lid is detected by said switch (330), and illuminates the insertion slot (308),
wherein the storage box (70) is provided under a seat (31) of the motorcycle (12), and the seat (31) also serves as the lid;
wherein the insertion slot (308) is provided so as to be oriented upward; and
wherein the motorcycle communication device (10) is provided in a side wall surface inside the storage box (70) opposite to a side where a side stand (68) is provided.

2. The motorcycle (12) according to Claim 1,
wherein the insertion slot (308) and the light (320) are provided in the same wall surface (326).

3. The motorcycle (12) according to Claim 1 or 2,
wherein the insertion slot (308) is provided so as to be oriented in the direction of the light (320).

4. The motorcycle (12) according to any one of Claims 1 to 3,
wherein the storage box (70) can store two helmets (H1, H2) along a direction of a vehicle length of the motorcycle (12); and
wherein, when an opening of the storage box (70) is viewed from the top, the motorcycle communication device (10) is provided at substantially a central position of the storage box (70) in the direction of the vehicle length.

## Patentansprüche

1. Motorrad (12) mit einer Anbringungsstruktur (300), die eine Motorradkommunikationseinrichtung (10) aufweist, die dazu ausgestaltet ist, eine Übertragung und einen Empfang spezifischer Informationen zwischen einem Motorrad (12) und der Umgebung über Funk durchzuführen, und die einen Einsetzschlitz (308) aufweist, in den eine Karte (306), auf der Informationen gespeichert sind, einsetzbar ist, wobei das Motorrad (12) weiterhin aufweist:
einen Aufbewahrungsbehälter (70), der einen Leerraum (70a) zum Aufbewahren eines Gegenstands enthält, und einen verschließbaren und zu öffnenden Deckel, der den Leerraum (70a) abdeckt, wobei die Motorradkommunikationseinrichtung (10) in dem Aufbewahrungsbehälter (70) vorgesehen ist;
einen Schalter (330), um den geöffneten/geschlossenen Zustand des Deckels zu erfassen; und
ein Licht (320), das in dem Aufbewahrungsbehälter (70) vorgesehen ist, und eingeschaltet wird, wenn das Öffnen des Deckels von dem Schalter (330) erfasst wird, und den Einsetzschlitz (308) beleuchtet,
wobei der Aufbewahrungsbehälter (70) unter einem Sitz des Motorrads (12) vorgesehen ist, und der Sitz (31) als der Deckel dient;
wobei der Einsatzschlitz (308) so vorgesehen ist, dass er nach oben ausgerichtet ist; und
wobei die Motorradkommunikationseinrichtung (10) in einer Seitenwandfläche in dem Aufbewahrungsbehälter (70) gegenüberliegend zu einer Seite vorgesehen ist, an der ein Seitenständer (68) vorgesehen ist.

2. Motorrad (12) nach Anspruch 1, wobei der Einsetzschlitz (308) und das Licht (320) in der gleichen Wandfläche (326) vorgesehen sind.

3. Motorrad (12) nach Anspruch 1 oder 2, wobei der Einsetzschlitz (308) so ausgerichtet ist, dass er in Richtung des Lichts (320) ausgerichtet ist.

4. Motorrad (12) nach einem der Ansprüche 1 bis 3,
wobei der Aufbewahrungsbehälter (70) zwei Helme (H1, H2) in einer Richtung der Fahrzeuglänge des Motorrads (12) aufnehmen kann; und
wobei, wenn eine Öffnung des Aufbewahrungsbehälters (70) von oben betrachtet wird, die Motorradkommunikationseinrichtung (10) an einer im Wesentlichen mittigen Position des Aufbewahrungsbehälters (70) in Richtung der Fahrzeuglänge vorgesehen ist.

## Revendications

1. Motocyclette (12) ayant une structure de montage (300) comprenant un dispositif de communication de motocyclette (10) qui est capable de réaliser une transmission et une réception d'informations spécifiques entre une motocyclette (12) et l'extérieur par radio, et qui inclut une fente d'insertion (308) dans laquelle une carte (306) stockant des informations prédéterminées peut être insérée, la motocyclette (12) comprenant en outre :
un coffre de rangement (70) incluant un espace (70a) pour le stockage d'un article, et un couvercle pouvant être ouvert et fermé qui couvre l'espace (70a), dans laquelle le dispositif de communication de motocyclette (10) est prévu à l'intérieur du coffre de rangement (70) ;
un commutateur (330) pour détecter l'état d'ouverture/fermeture du couvercle ; et
une lumière (320) qui est prévue à l'intérieur du coffre de rangement (70) et s'allume lorsque l'ouverture du couvercle est détectée par ledit commutateur (330), et éclaire la fente d'insertion (308),
dans laquelle le coffre de rangement (70) est prévu sous un siège (31) de la motocyclette (12), et le siège (31) sert également de couvercle ;
dans laquelle la fente d'insertion (308) est prévue de façon à être orientée vers le haut ; et
dans laquelle le dispositif de communication de la motocyclette (10) est prévu dans une surface de paroi latérale à l'intérieur du coffre de rangement (70) opposée à un côté où une béquille latérale (68) est prévue.

2. Motocyclette (12) selon la revendication 1,
dans laquelle la fente d'insertion (308) et la lumière (320) sont prévues dans la même surface de paroi (326) .

3. Motocyclette (12) selon la revendication 1 ou 2,
dans laquelle la fente d'insertion (308) est prévue de façon à être orientée dans la direction de la lumière (320) .

4. Motocyclette (12) selon l'une quelconque des revendications 1 à 3,
dans laquelle le coffre de rangement (70) peut stocker deux casques (H1, H2) le long d'une direction d'une longueur de véhicule de la motocyclette (12) ; et
dans laquelle, lorsqu'une ouverture du coffre de rangement (70) est vue du dessus, le dispositif de communication de la motocyclette (10) est prévu sur une position sensiblement centrale du coffre de rangement (70) dans la direction de la longueur du véhicule.
